# EUROPEAN PATENT SPECIFICATION

(11) **EP 2 738 835 B1**
(45) Date of publication and mention of the grant of the patent: **13.04.2016**
(21) Application number: 12820564.8
(22) Date of filing: 10.07.2012
(51) Int. Cl.: H01M 2/10, H01M 2/12, H01M 2/20, H01M 2/02

(54) **BATTERY MODULE**
BATTERIEMODUL
MODULE BATTERIE

(30) Priority: 29.07.2011 JP 2011167076
(43) Date of publication of application: 04.06.2014
(73) Proprietor: Panasonic Intellectual Property Management Co., Ltd., Osaka 540-6207 (JP)
(72) Inventor: TAKASAKI, Hiroshi, Osaka 540-6207 (JP); GESHI, Shinya, Osaka 540-6207 (JP); OKUTANI, Oose, Osaka 540-6207 (JP)
(74) Representative: Grünecker Patent- und Rechtsanwälte PartG mbB
(86) International application number: PCT/JP2012/004454
(87) International publication number: WO 2013/018286

(56) References cited:
- EP-A1- 2 320 493
- WO-A1-2008/074034
- WO-A1-2010/098067
- JP-A- 2009 164 085
- JP-A- 2010 080 352
- JP-A- 2010 140 695
- JP-A- 2010 146 774
- JP-A- 2011 065 962

## Description

### TECHNICAL FIELD

The present invention relates to battery modules, and specifically to a battery module including a plurality of battery blocks which are connected to each other and each of which has a plurality of cells according to the preamble of claim 1.

### BACKGROUND ART

A battery module as described in the preamble of claim 1 is already known from JP 2011 065 962 A. In recent years, in view of savings in resources and conservation of energy, there have been increasing demands for nickel-hydrogen secondary batteries, nickel-cadmium secondary batteries, lithium ion secondary batteries, etc. which can be used repeatedly. Among them, lithium ion secondary batteries are characterized by lightness in weight, high electromotive force, and high energy density. Thus, there are growing demands for the lithium ion secondary batteries as power sources for driving various kinds of mobile electronic devices and portable communication devices such as mobile phones, digital cameras, video cameras, and laptop personal computers.

On the other hand, in order to reduce the amount of use of fossil fuel or to reduce the amount of emission of CO₂, expectations for battery modules are growing to serve as power sources for driving motors of, for example, vehicles, or power sources for domestic or industrial use. In an example configuration of such a battery module, a plurality of assembled batteries each composed of a plurality of cells are connected in parallel and in series in order to obtain a desired voltage and capacitance. Patent Document 1 describes a battery module having such a configuration.

Patent Document 1 describes a battery pack including a collection of seven assembled batteries connected to each other in series, wherein each assembled battery includes 20 cells connected to each other in parallel, each cell being a cylindrical lithium ion secondary battery. The battery pack includes a resin case in which a temperature adjustment unit, the collection of the assembled batteries, etc. are accommodated. An upper surface of the case is closed with an external plate (lid) made of metal. A front surface of the case is closed with a front panel made of a resin. The case is partitioned by a flat plate provided at one end of the plurality of cells into an accommodation section in which the plurality of cells are accommodated and an exhaust duct via which a gas released through an opening of at least one of the cells is released to the outside of the case.

The temperature adjustment unit is provided with holders in each of which the cell is press-fitted. A flow path through which fluid flows is formed between the holders. Moreover, inlet and outlet tubes through which fluid is supplied to the flow path are connected to a front panel of the temperature adjustment unit. The inlet and outlet tubes are each inserted into a through hole formed in the front panel.

### CITATION LIST

### PATENT DOCUMENT

PATENT DOCUMENT 1: Japanese Unexamined Patent Publication No.2011-65906

### SUMMARY OF THE INVENTION

### TECHNICAL PROBLEM

The battery pack described in Patent Document 1 includes 140 cells, wherein the cells are inserted in holders in each of which cylindrical holes are formed, so that the cells are held in and cooled by the holders. The cells in the holders are accommodated in the case, which results in a power supply having a large total size. However, when a high priority is assigned to the degree of freedom in designing electrical apparatuses, the power supply is required to be disposed in an eventually remaining space: A large-sized rectangular power source such as the battery pack of Patent Document 1 does not comply with such a requirement.

It may be possible to reduce the total size of the battery pack by reducing the number of cells. In this case, however, the volume ratio of the cells to the battery pack is low, thereby causing a problem where energy density is reduced. In order to omit members other than the cells, a safety issue has to be taken into consideration, that is, simply omitting members is not possible. Moreover, when battery packs are coupled to each other, a passage for connecting exhaust ducts of the battery packs to each other has to be formed. This passage reduces volumetric energy density.

In view of the problems discussed above, the present invention was devised. An objective of the present invention is to provide a high safety battery module.

### SOLUTION TO THE PROBLEM

A battery module of the present invention includes: a plurality of battery blocks which are connected to each other and each of which includes a plurality of cells, wherein each of the cells has an opening through which a gas generated in the cell is released to an outside of the cell, each of the battery blocks has a holder in which the cells are accommodated with the openings of the cells being aligned on a same side, on a side of the battery block on which the openings are aligned, a flat plate in touch with the cells is disposed such that the gas passes above the flat plate, and each adjacent two of the battery blocks are disposed such that the flat plates are substantially flush with each other, and the flat plate of one of the each adjacent two of the battery blocks extends above the holder of the other of the each adjacent two of the battery blocks wherein the holder is made of a plurality of pipes, whose side surfaces are connected to each other. The flat plates being substantially flush with each other means that surfaces of two plates are not necessarily flush with each other in a strict sense, but the plates may be slightly shifted from the flush disposition in consideration of a design margin or allowance in assembling.

The flat plate is preferably an electrode plate.

An exhaust passage through which the gas released from the cell is released to an outside of the battery block is preferably provided above the flat plate of the battery block. The battery module preferably further includes: a lid above the flat plate of the battery block, wherein the exhaust passage is preferably formed under the lid.

The exhaust passage of one of the each adjacent two of the battery blocks electrically connected to each other is preferably coupled to and integrated with the exhaust passage of the other of the each adjacent two of the battery blocks. One exhaust passage being coupled to and being integral with another exhaust passage means that the two exhaust passages are connected to each other without gap at the connecting section between the exhaust passages.

### ADVANTAGES OF THE INVENTION

A first electrode plate on an upper surface of one of each adjacent two battery blocks of the battery module of the present invention extends above the holder of the other of the each adjacent two battery blocks. Thus, an upper part of a space between the holders of the two adjacent battery blocks is protected by the first electrode plate against a gas released from the cell, so that a high degree of safety and a high energy density can be obtained.

### BRIEF DESCRIPTION OF THE DRAWINGS

[FIG. 1] FIG. 1 is a sectional view schematically illustrating a cell according to an embodiment.
[FIG. 2] FIG. 2 is a cross-sectional view illustrating a battery block according to the embodiment.
[FIG. 3] FIG. 3 is an exploded perspective view of a battery block according to the embodiment.
[FIG. 4] FIG. 4 is a perspective view of the battery block according to the embodiment.
[FIG. 5] FIG. 5 is a perspective view of a holder according to the embodiment.
[FIG. 6] FIG. 6 is a view illustrating an upper surface of the battery block according to the embodiment.
[FIG. 7] FIG. 7 is a view illustrating upper surfaces of two battery blocks adjacent to each other.
[FIG. 8] FIG. 8 is a perspective view illustrating a battery module according to the embodiment.

### DESCRIPTION OF EMBODIMENTS

Embodiments of the present disclosure will be described in detail below based on the drawings. In the drawings, like reference numbers generally indicate functionally similar elements for the sake of simplicity of description.

### (First Embodiment)

<Cell>

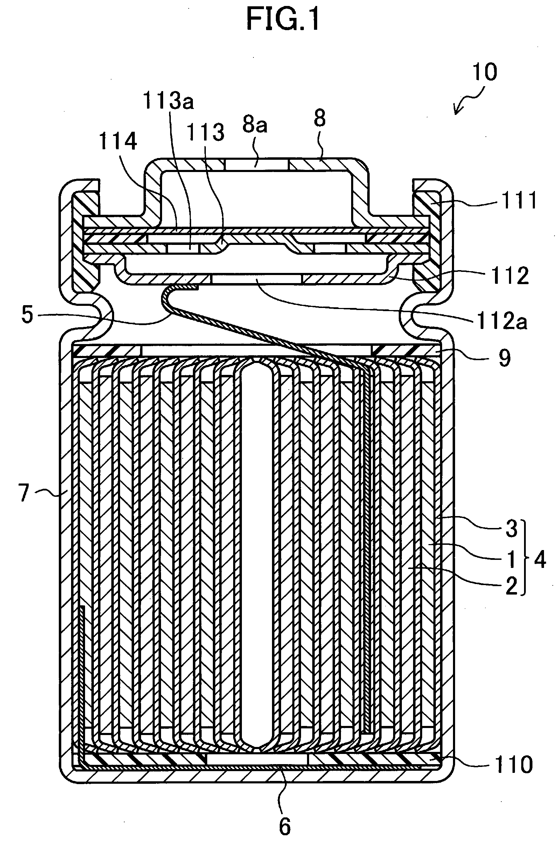

FIG. 1 is a cross-sectional view schematically illustrating a configuration of a cell 10 used in a battery module in a first embodiment of the invention. A battery used in the battery module of the present invention may be a battery which can be used independently as a power source of a portable electronic device, such as a lap top computer (hereinafter the battery used in the battery module is referred to as a "cell"). In this case, high-performance, general-purpose batteries can be used as cells of the battery module. Therefore, it is possible to easily improve the performance of the battery module and reduce the cost of the battery module.

For example, a cylindrical lithium ion secondary battery as illustrated in FIG. 1 can be used as the cell 10 used in the battery module of the present invention. The lithium ion secondary battery has a common configuration including a safety mechanism to release a gas to the outside of the battery when the pressure in the battery is increased due to an internal short-circuit, etc. A specific configuration of the cell 10 will be described below with reference to FIG. 1.

As illustrated in FIG. 1, an electrode group 4 including a positive electrode 2 and a negative electrode 1 wound with a separator 3 between the positive electrode 2 and the negative electrode 1 is accommodated in a battery case 7 together with a nonaqueous electrolyte. Insulating plates 9 and 110 are respectively provided above and under the electrode group 4. The positive electrode 2 is connected to a filter 112 by a positive electrode lead 5. The negative electrode 1 is connected to a bottom of the battery case 7 by a negative electrode lead 6, the bottom also serving as a negative electrode terminal (second electrode terminal).

The filter 112 is connected to an inner cap 113, and a raised portion of the inner cap 113 is connected to a valve plate 114 made of metal. The valve plate 114 is connected to a terminal plate 8 also serving as a positive electrode terminal (first electrode terminal). An opening of the battery case 7 is sealed via a gasket 111 by the terminal plate 8, the valve plate 114, the inner cap 113, and the filter 112 together.

When the pressure in the cell 10 is increased due to an internal short-circuit, etc. formed in the cell 10, the valve body 114 expands toward the terminal plate 8, and the connection between inner cap 113 and the valve body 114 is released, a current path is interrupted. When the pressure in the cell 10 further increases, the valve body 114 is broken. As such, the gas generated in the cell 10 is released to the outside via a through hole 112a of the filter 112, a through hole 113a of the inner cap 113, a slit of the valve body 114, and an opening 8a of the terminal plate 8.

A safety mechanism to release the gas generated in the cell 10 to the outside may be but not limited to the structure illustrated in FIG. 1.

### <Battery Module>

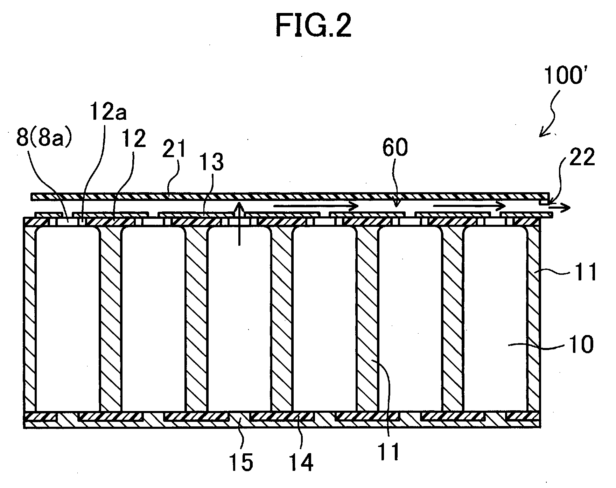

FIG. 2 is a cross-sectional view schematically illustrating a configuration of a battery block 100' in the present embodiment. Since illustrating the internal structure of cells 10 complicates the figure, the cells 10 are not hatched.

FIG. 2 shows a schematic sectional view of the battery block 100' in which the plurality of cells 10 are aligned and connected to each other in parallel. Each cell 10 is inserted in an accommodation section 11a of a pipe holder 11, so that a side surface of the cell 10 is covered with the accommodation section 11a. As illustrated in FIG. 1, the cell 10 has the opening 8a through which the gas generated in the cell 10 is released to the outside of the cell.

The plurality of cells 10 are aligned in the battery block 100' such that the positive electrodes of the cells 10 face upward, the negative electrode of the cells 10 face downward, and the side surfaces of the cells 10 are adjacent to each other. A negative electrode plate 15 is provided on a negative electrode side with an insulative spacer 14 disposed between the negative electrode plate 15 and the negative electrodes. A positive electrode plate (first electrode plate) 13 is provided on a positive electrode side with an insulative spacer 12 disposed between the positive electrode plate 13 and the positive electrodes. The positive electrode plate 13 is a flat plate. The opening 8a of the cell 10 is in communication with an exhaust passage 60 via an opening 12a formed in the spacer 12.

The exhaust passage 60 is formed between the positive electrode plate 13 on the spacer 12 and a lid 21. A gas released through the opening 8a of the cell 10 is output to the exhaust passage 60, and then is released to the outside of the battery block 100' via an outlet 22. That is, the gas passes above the positive electrode plate 13. When another battery block 100' is disposed to be adjacent to the battery block 100' and is connected to the battery pack 100', the outlet 22 is coupled to and integrated with the exhaust passage 60 of the another battery block 100'. In this case, a coupling section between the two exhaust passages 60 is formed not to have a gap, so that the gas is not released to the outside through the coupling section.

Next, a detailed structure of a battery block will be described.

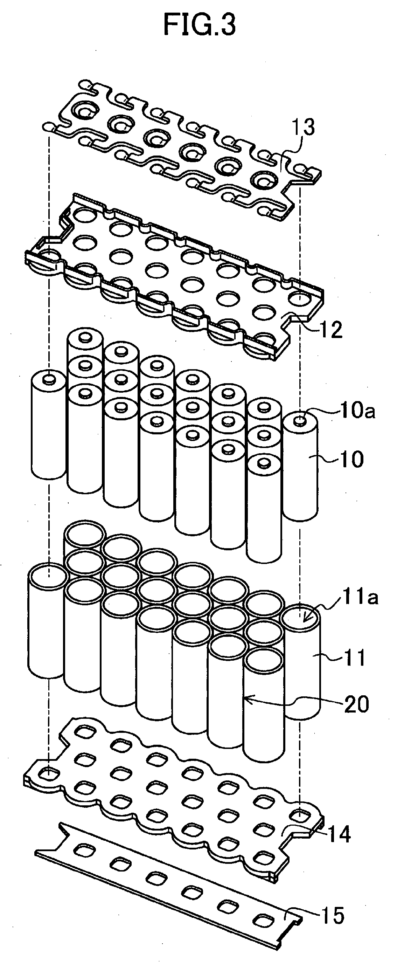

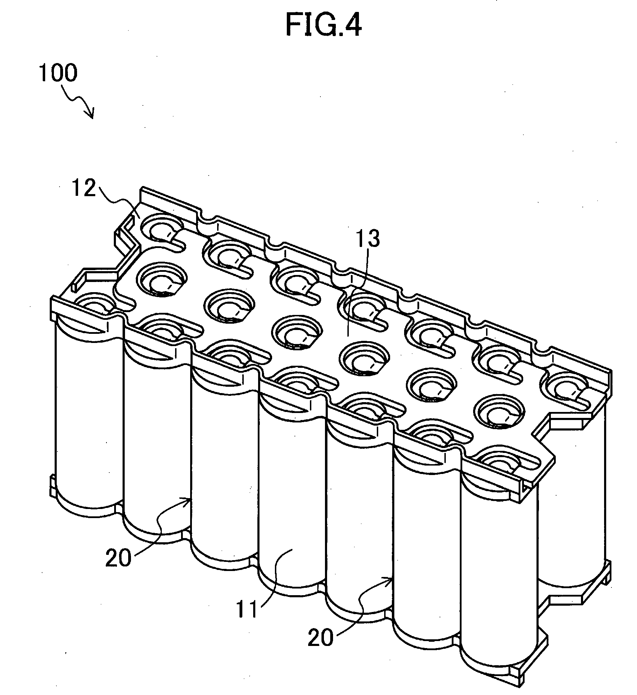

FIG. 3 is an exploded perspective view illustrating a configuration of a battery block 100 of the present embodiment. FIG. 4 is a perspective view of the battery block 100. Note that in FIGS. 3 and 4, the lid 21 of FIG. 2 is not illustrated.

As illustrated in FIG. 3, in the battery block 100 of the present embodiment, a plurality of cylindrical cells 10 are arranged in a staggered manner so that the cylinders are in an upright position. Each cell 10 is accommodated in an accommodation section 11a of a pipe holder 11 which is a hollow cylinder. The plurality of pipe holders 11 are collected and are fastened to each other, thereby forming a holder for accommodating the cells 10. That is, the holder has a configuration in which side surfaces of a plurality of pipes are connected to each other.

An inner circumferential surface of each pipe holder 11 has substantially the same shape as an outer circumferential surface of each cell 10, and the outer circumferential surface of the cell 10 accommodated in each accommodation section 11a of the pipe holder 11 is in contact with the inner circumferential surface of the accommodation section 11a. With this configuration, when the pipe holder 11 is made of a material having a high thermal conductivity such as aluminum, heat can be effectively dissipated from the cell 10 to the pipe holder 11.

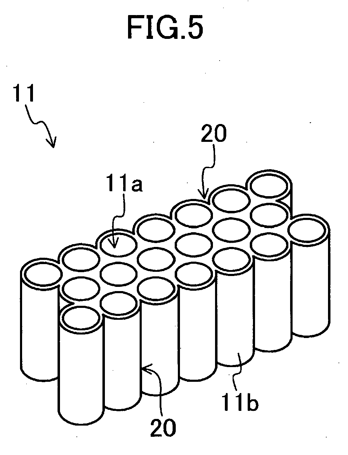

Instead of collecting the plurality of pipe holders 11 to form a holder for accommodating the plurality of cells 10, the holder may be formed by a block having cylindrical accommodation sections 11 a for accommodating a plurality of cells 10 as illustrated in FIG. 5.

At one end (on a positive electrode terminal side, on an upper surface side) of the cells 10, a positive electrode plate 13 is arranged with an insulative spacer 12 disposed between the positive electrode plate 13 and the positive electrode terminals of the cells 10. The positive electrode plate 13 electrically connects the positive electrode terminals of the cells 10 to each other in parallel.

At the other end (on a negative electrode terminal side, on a lower surface side) of the cells 10, a negative electrode plate 15 is arranged with an insulative spacer 14 disposed between the negative electrode plate 15 and negative electrode terminal of the cells 10. The negative electrode plate 15 electrically connects the negative electrode terminals (battery cases) of the cells 10 to each other in parallel.

### <Battery Module>

The arrangement of the positive electrode plate 13 will be described first.

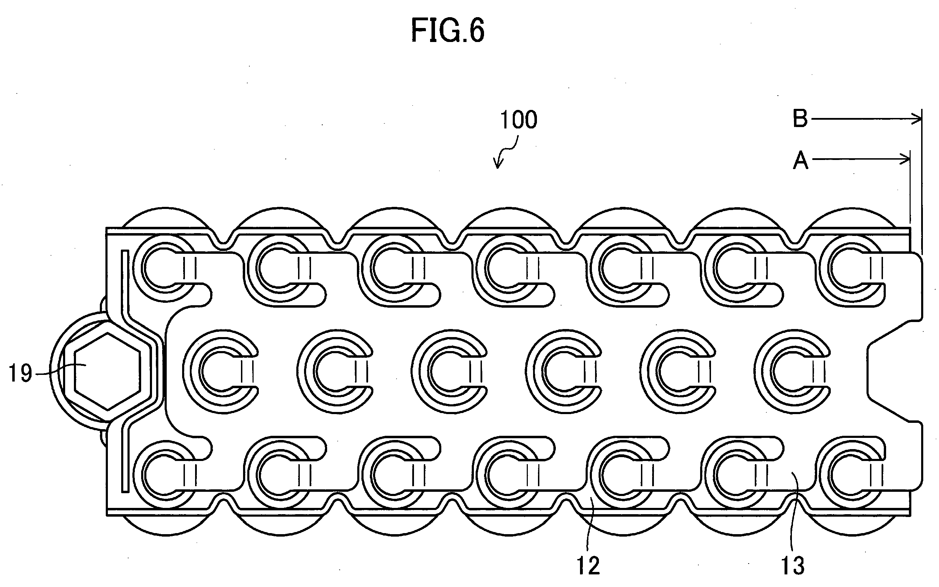

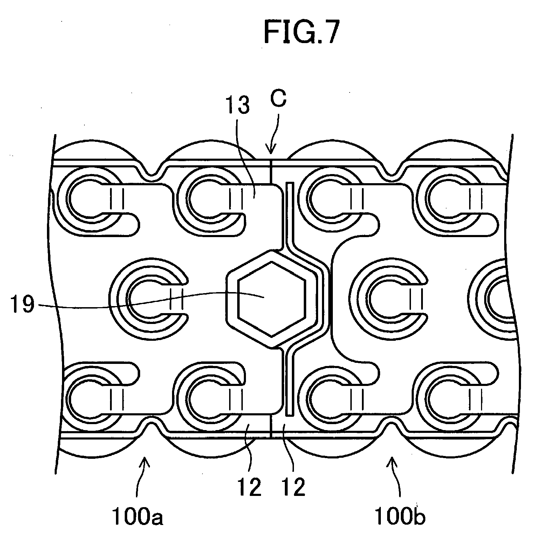

As illustrated in FIG. 6, on an upper surface side of the battery block 100, the spacer 12 on a positive electrode side of the cells 10 is provided above the holder 11, and the positive electrode plate 13 is mounted on the spacer 12, wherein the positive electrode plate 13 is electrically in contact with the positive electrode terminals of the cells 10 through holes formed in the spacer 12. Here, on a right end in the figure, a right edge B of the positive electrode plate 13 protrudes to the right beyond a right edge A of the holder (which is hidden by the spacer 12 and cannot be seen in the figure). Since the spacer 12 extends only to the right edge A of the holder, the spacer 12 is not provided under the protruding portion of the positive electrode plate 13 on the right end. In contrast, on a left end in the figure, a left edge of the positive electrode plate 13 extends only to a left edge of the holder, and only the spacer 12 extends to the left edge of the holder. Therefore, when two battery block 100a and 100b are adjacent to and connected to each other as illustrated in FIG. 7, the right edge A of the positive electrode plate 13 of the battery block 100a on the left protrudes and is located above the holder of the battery block 100b on the right. Reference symbol C in the figure represents a boundary between the holders of the battery blocks 100a and 100b. Center sections on the left and right edges of both the positive electrode plate 13 and the spacer 12 have a recessed shape, and a block bus bar 19 is disposed at the recessed sections. The block bus bar 19 is a member having a hexagonal shape and electrically connecting the negative electrodes on a lower surface side of the battery block 100a on the left to the positive electrodes on an upper surface side of the battery block 100b on the right.

When the positive electrode plate 13 is provided as described above, the boundary between the holders of the two adjacent battery blocks 100a and 100b is covered with the positive electrode plate 13, so that a gas passing above the positive electrode plate 13 (a gas released from the cell 10) does not enter a gap at the boundary between the holders. When an abnormal situation such as an internal short-circuit occurs in the cell 10, a gas is released from the cell 10. Thus, the gas has a high temperature, and is preferably released separately as far possible from the cell 10 to the outside so that the temperature of normal cells 10 in which no abnormal situation has occurred is not increased. From this point of view, the above-described arrangement of the positive electrode plate 13 can ensure high safety because the gas can be kept away from the normal cells 10,

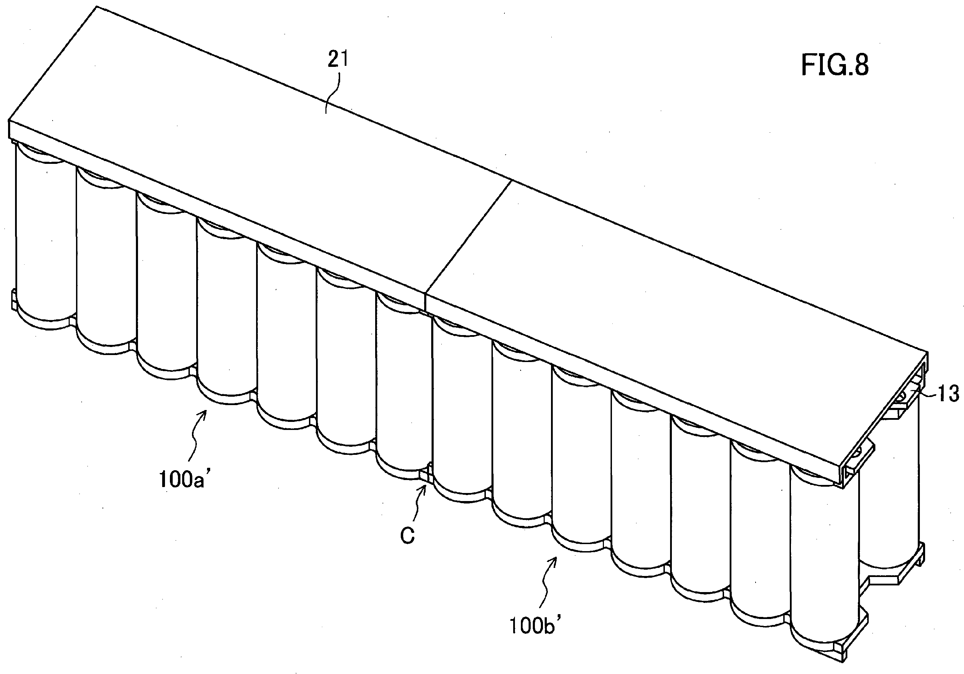

In a battery module including two battery blocks 100a' and 100b' having lids 21 as illustrated in FIG. 8, when a gas is generated in a cell 10, the gas passes through an exhaust passage 60 between each of positive electrode plates 13 and each of lids 21 disposed above the positive electrode plates 13 and is released to the outside of the battery module.

### (Other Embodiments)

The above-described embodiments merely illustrate the claimed invention and are not intended to limit the claimed invention. Well-known techniques, common techniques, publicly known techniques may be combined with the embodiments or may substitute for part of the embodiments. Modified invention at which those skilled in the art easily arrive is within the scope of the claimed invention. The scope of protection is defined by the claims.

In the embodiment, the cell 10 is a lithium ion secondary battery. However, the type of a battery used is not particularly limited. Other secondary batteries (e.g., nickel-hydrogen batteries) may be used.

The embodiment is configured such that the electrode plate extends over the holder of the adjacent battery block, but the claimed invention is not limited to this configuration. For example, an insulative spacer disposed above the holder may be configured to extend over the holder of the adjacent battery block.

The configurations of the battery block and the battery module are examples, and the number of cells in one battery block, the arrangement of cells, the types of cells are not particularly limited. The number of battery blocks included in the battery module is also not limited. The shape of the holder, the configuration of the lid, etc. are not limited to the above embodiment.

In the embodiment, the plurality of cells 10 are arranged in a staggered manner, but other arrangements are possible.

### INDUSTRIAL APPLICABILITY

As described above, the battery module according to the present invention has a high degree of safety, and is useful for application to electric vehicles.

### DESCRIPTION OF REFERENCE CHARACTERS

- 8a: Opening
- 10: Cell
- 11: Pipe Holder
- 13: Positive Electrode Plate (Flat Plate)
- 21: Lid
- 60: Exhaust Passage
- 100, 100': Battery Block
- 100a, 100b: Battery Block
- 100a', 100b': Battery Block

## Claims

1. A battery module comprising:
a plurality of battery blocks (100, 100', 100a, 100b) which are connected to each other and each of which includes a plurality of cells (10), wherein
each of the cells (10) has an opening (8a) through which a gas generated in the cell (10) is released to an outside of the cell (10),
each of the battery blocks (100, 100', 100a, 100b) has a holder (11) in which the cells (10) are accommodated with the openings (8a) of the cells (10) being aligned on a same side,
on a side of the battery block (100, 100', 100a, 100b) on which the openings (8a) are aligned, a flat plate (13) in touch with the cells (10) is disposed such that the gas passes above the flat plate (13), and
each adjacent two of the battery blocks (100, 100', 100a, 100b) are disposed such that the flat plates (13) are substantially flush with each other, and the flat plate (13) of one of the each adjacent two of the battery blocks (100, 100', 100a, 100b) extends above the holder (11) of the other of the each adjacent two of the battery blocks (100, 100', 100a, 100b), **characterized in that**
the holder (11) is made of a plurality of pipes, whose side surfaces are connected to each other.

2. The battery module of claim 1, wherein
the flat plate (13) is an electrode plate (13).

3. The battery module of claim 1 or 2 wherein
an exhaust passage (60) through which the gas released from the cell (10) is released to an outside of the battery block (100, 100', 100a, 100b) is provided above the flat plate (13) of the battery block (100, 100', 100a, 100b).

4. The battery module of claim 3, further comprising:
a lid (21) above the flat plate (13) of the battery block (100, 100', 100a, 100b), wherein the exhaust passage (60) is formed under the lid (21).

5. The battery module of claim 3 or 4, wherein
the exhaust passage (60) of one of the each adjacent two of the battery blocks (100, 100', 100a, 100b) electrically connected to each other is coupled to and integrated with the exhaust passage (60) of the other of the each adjacent two of the battery blocks (100, 100', 100a, 100b).

## Patentansprüche

1. Batteriemodul mit:
mehreren Batterieblöcken (100, 100', 100a, 100b), die miteinander verbunden sind und wovon jeder mehrere Zellen (10) aufweist, wobei
jede der Zellen (10) eine Öffnung (8a) aufweist, durch welche ein in der Zelle (10) erzeugtes Gas von der Zelle (10) nach außen abgegeben wird,
jeder der Batterieblöcke (100, 100', 100a, 100b) eine Halterung (11) aufweist, in der die Zellen (10) aufgenommen sind, wobei die Öffnungen (8a) der Zellen (10) an einer gleichen Seite ausgerichtet sind,
auf einer Seite des Batterieblocks (100, 100', 100a, 100b), auf der die Öffnungen (8a) ausgerichtet sind, eine flache Platte (12) in Kontakt mit dem Zellen (10) so angeordnet ist, dass das Gas über der flachen Platte (13) strömt, und
jeweils zwei benachbarte Blöcke der Batterieblöcke (100, 100', 100a, 100b) derart angeordnet sind, dass die flachen Platten (13) im Wesentlichen bündig zueinander sind, und die flache Platte (13) eines der jeweils zwei benachbarten Blöcke der Batterieblöcke (100, 100', 100a, 100b) sich über die Halterung (11) des anderen der jeweils zwei benachbarten Blöcke der Batterieblöcke (100, 100', 100a, 100b) erstreckt, **dadurch gekennzeichnet, dass**
die Halterung (11) aus mehreren Leitungen aufgebaut ist, deren Seitenflächen miteinander verbunden sind.

2. Batteriemodul nach Anspruch 1, wobei
die flache Platte (13) eine Elektrodenplatte (13) ist.

3. Batteriemodul nach Anspruch 1 oder 2, wobei
ein Auslassdurchlass (60), durch welchen das von der Zelle (10) abgegebene Gas an die Umgebung des Batterieblocks (100, 100', 100a, 100b) abgegeben wird, über der flachen Platte (13) des Batterieblocks (100, 100', 100a, 100b) vorgesehen ist.

4. Batteriemodul nach Anspruch 3, das ferner umfasst:
einen Deckel (21) über der flachen Platte (13) des Batterieblocks (100, 100', 100a, 100b), wobei der Auslassdurchlass (60) unter dem Deckel (21) ausgebildet ist.

5. Batteriemodul nach Anspruch 3 oder 4, wobei
der Auslassdurchlass (60) eines der jeweils zwei benachbarten Blöcke der Batterieblöcke (100, 100', 100a, 100b), die elektrisch miteinander verbunden sind, mit dem Auslassdurchlass (60) des anderen der jeweils zwei benachbarten Blöcke der Batterieblöcke (100, 100', 100a, 100b) verbunden und mit diesem als Einheit ausgebildet ist.

## Revendications

1. Module de batteries comprenant :
une pluralité de blocs de batteries (100, 100', 100a, 100b) qui sont connectés les uns aux autres et chacun d'entre eux comportant une pluralité d'éléments (10), dans lequel
chacun des éléments (10) possède une ouverture (8a) à travers laquelle un gaz généré dans l'élément (10) est libéré vers l'extérieur de l'élément (10),
chacun des blocs de batteries (100, 100', 100a, 100b) comporte un support (11) dans lequel sont reçus les éléments (10), les ouvertures (8a) des éléments (10) étant alignées sur un même côté,
sur un côté du bloc de batteries (100, 100', 100a, 100b) sur lequel sont alignées les ouvertures (8a) est disposée une plaque plate (13) en contact avec les éléments (10), de sorte que le gaz passe au-dessus de la plaque plate (13), et
chaque paire de blocs de batteries adjacents (100, 100', 100a, 100b) est disposée de sorte que les plaques plates (13) sont sensiblement de niveau l'une avec l'autre, et la plaque plate (13) d'un bloc de chaque paire de blocs de batteries adjacents (100, 100', 100a, 100b) s'étend au-dessus du support (11) de l'autre bloc de chaque paire de blocs de batteries adjacents (100, 100', 100a, 100b), **caractérisée en ce que**
le support (11) est fait d'une pluralité de tuyaux, dont les surfaces latérales sont reliées entre elles.

2. Module de batteries selon la revendication 1, dans lequel
la plaque plate (13) et une plaque d'électrode (13).

3. Module de batteries selon la revendication 1 ou 2, dans lequel
un passage d'échappement (60) à travers lequel le gaz libéré de l'élément (10) est libéré vers l'extérieur du bloc de batteries (100, 100', 100a, 100b) est prévu au-dessus de la plaque plate (13) du bloc de batteries (100, 100', 100a, 100b).

4. Module de batteries selon la revendication 3, comprenant en outre :
un couvercle (21) au-dessus de la plaque plate (13) du bloc de batteries (100, 100', 100a, 100b), dans lequel le passage d'échappement (60) est formé en dessous du couvercle (21).

5. Module de batteries selon la revendication 3 ou 4, dans lequel
le passage d'échappement (60) d'un bloc de chaque paire de blocs de batteries adjacents (100, 100', 100a, 100b) connectés électriquement entre eux est couplé au, et fait partie intégrante du passage d'échappement (60) de l'autre bloc de chaque paire de blocs de batteries adjacents (100, 100', 100a, 100b).
